# EUROPEAN PATENT APPLICATION

(11) **EP 4 206 365 A1**
(43) Date of publication of application: **05.07.2023**
(21) Application number: 22168647.0
(22) Date of filing: 15.04.2022
(51) Int. Cl.: C25D 17/00, C25D 17/20

(54) **FIXING DEVICE OF ELECTROPLATING RACK**

(30) Priority: 03.01.2022 TW 111100157
(71) Applicant: Hallmark Technology Co., Ltd., Kaohsiung, Taiwan 81546 (TW)
(72) Inventor: Huang, Po-Tao, 815 Kaoshiung City (TW); Liu, Yao-Chung, 815 Kaoshiung City (TW)
(74) Representative: Petraz, Gilberto Luigi

(57) **Abstract**

A fixing device of an electroplating rack (101) is provided. The fixing device includes at least one conductive element (2) and at least one conductive base (3). The conductive element (2) is disposed on the electroplating rack (101), the conductive base (3) is arranged on a platform (102) and opposite the conductive element (2), and the conductive base (3) includes a plurality of conductive sheets (31) and a hole (32). The position of the electroplating rack (101) after being lowered can be accurately controlled and positioned by the conductive element (2) and the conductive sheets (31) being pressed against each other, and the conductive element (2) does not easily slip off.

## Description

### CROSS REFERENCE TO RELATED APPLICATIONS

This application claims the priority of Taiwan Patent Application No. 111100157, filed on January 03, 2022. The disclosure of which is incorporated herein by reference.

### FIELD OF INVENTION

The present disclosure relates to a fixing device, and in particular, relates to a fixing device of an electroplating rack.

### BACKGROUND OF INVENTION

The general electroplating process is to input current into an anode and a cathode during the electrolysis process, so that the anode and the cathode undergo a redox reaction, wherein the metal ions in the electroplating solution move to the cathode to attach to a surface of the objects to be plated (such as a plated plate), thereby forming a metal shell on the surface of the objects.

The objects are usually electroplated by using an electroplating rack. The electroplating rack includes an electrode base arranged at the adjacent edge of an outer end of a main frame and a conductive base arranged at the adjacent edge of a side frame. The electrode base and the conductive base may be movably contacted, so as to facilitate a conductive operation during electroplating.

Further, a tapered portion is formed under the electrode base, the conductive base includes two inclined plates, and the two inclined plates form a V-shaped groove. The tapered portion of the electrode base may match the V-shaped groove formed by the two inclined plates to form an electrical connection when being in contact. When the main frame descends to perform electroplating, the tapered portion of the electrode base follows the V-shaped groove and contacts the two inclined plates, thereby forming the electrical conduction and starting the electroplating operation.

However, in the combination of the tapered portion of the electrode base and the two inclined plates of the conductive base, the position where the tapered portion protrudes into the V-shaped groove not only is impossible to control, but also cannot be accurately positioned and fixed, which is prone to slippage. The structure of the tapered portion of the electrode base and the two inclined plates of the conductive base is easily deformed, resulting in poor contact and inability to electrically connect. It not only increases the energy consumption and affects the plating quality of the electroplating operation, but also accelerates the aging speed of the components.

As a result, it is necessary to provide a fixing device of an electroplating rack to solve the problems existing in the conventional technologies, as described above.

### SUMMARY OF INVENTION

An object of the present disclosure is to provide a fixing device of an electroplating rack, wherein a position of an electroplating rack after being lowered may be accurately controlled and positioned by a conductive element and conductive sheets being pressed against each other, and the conductive element does not easily slip off.

To achieve the above object, the present disclosure provides a fixing device of an electroplating rack, wherein the fixing device comprises at least one conductive element and at least one conductive base. The conductive element is disposed on the electroplating rack. The conductive base is arranged on a platform and opposite the conductive element, wherein the conductive base includes a plurality of conductive sheets and a hole defined and surrounded by the conductive sheets, and the hole is configured to be inserted by the conductive element such that the conductive sheets are compressed and electrically connected to the conductive element.

In one embodiment of the present disclosure, the conductive base further comprises an upper body and a lower body, the upper body is combined onto the lower body, the conductive sheets are disposed on the lower body, and the hole is located below a through hole of the upper body.

In one embodiment of the present disclosure, a diameter of the through hole is gradually tapered from a top of the upper body to a bottom of the upper body.

In one embodiment of the present disclosure, a recess is formed on the bottom of the upper body and in communication with the through hole, and the recess is configured to accommodate a plurality of upper edges of the conductive sheets.

In one embodiment of the present disclosure, a diameter of the recess is larger than a diameter of the hole formed by the upper edges of the conductive sheets.

In one embodiment of the present disclosure, a bottom of the lower body is provided with at least one electrode electrically connected to the conductive sheets.

In one embodiment of the present disclosure, each of the conductive sheets comprises an upper portion and a lower portion, and a connection between the upper portion and the lower portion is concave and formed an angle.

In one embodiment of the present disclosure, the conductive base further comprises a tightening spring straining a periphery of the conductive sheets.

In one embodiment of the present disclosure, the conductive element comprises a front section, a medium section, and a rear section, the front section is tapered and extended from one end of the medium section, the rear section is extended from another end of the medium section, and the rear section is configured to combine onto the electroplating rack.

As described above, the conductive element and the conductive sheets are pressed against each other, and the conductive element may be stably fixed in a specific position, so that the position of the electroplating rack after the drop may be accurately controlled and positioned. The conductive elements do not easily slip off, and the conductive element and the conductive sheets may be electrically connected effectively and continuously. It may reduce energy consumption and improve the plating quality of the electroplating operation and may also avoid the aging of the components. Moreover, the plugging and unplugging combination of the conductive element and the conductive sheets is also relatively simple and convenient for subsequent maintenance and cleaning.

### DESCRIPTION OF DRAWINGS

FIG. 1 is a schematic diagram of a fixing device of an electroplating rack according to an embodiment of the present disclosure.
FIG. 2 is a schematic diagram of a conductive element of the fixing device of the electroplating rack before inserting into a conductive base according to an embodiment of the present disclosure.
FIG. 3 is a schematic diagram of the conductive element of the fixing device of the electroplating rack after inserting into a conductive base according to an embodiment of the present disclosure.
FIG. 4 is a schematic diagram of a fixing device of an electroplating rack according to another embodiment of the present disclosure.

### DETAILED DESCRIPTION OF PREFERRED EMBODIMENTS

The structure and the technical means adopted by the present disclosure to achieve the above and other objects can be best understood by referring to the following detailed description of the preferred embodiments and the accompanying drawings. Furthermore, directional terms described by the present disclosure, such as upper, lower, front, back, left, right, inner, outer, side, longitudinal/vertical, transverse/horizontal, etc., are only directions by referring to the accompanying drawings, and thus the used directional terms are used to describe and understand the present disclosure, but the present disclosure is not limited thereto.

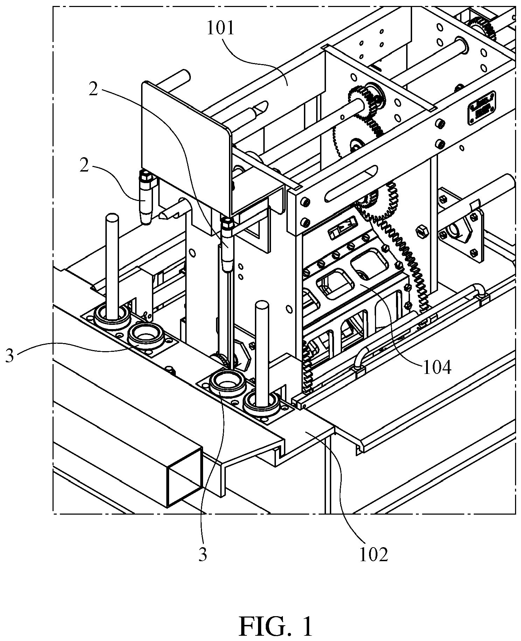

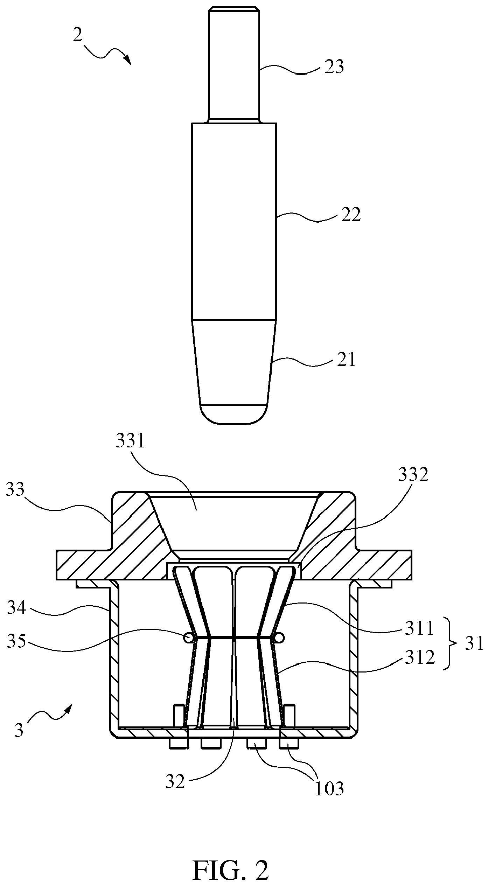

Referring to FIG. 1 and FIG. 2, a fixing device of an electroplating rack 101 according to an embodiment of the present disclosure is illustrated, wherein the fixing device comprises two conductive elements 2 and two conductive base 3. The detailed structure of each component, assembly relationships, and principle of operation in the present invention will be described in detail hereinafter.

Referring to FIG. 1 and FIG. 2, the conductive elements 2 are disposed on one side of the electroplating rack 101 and the conductive elements 2 are spaced apart from each other. The conductive bases 2 are arranged on a platform 102, and the conductive bases 2 are opposite the conductive elements 3. In the embodiment, an electroplating roller 104 is installed on an inner side of the electroplating rack 101. The electroplating roller 104 is driven and rotated by a driver (not shown) located on another side of the electroplating rack 101.

Referring to FIG. 1 and FIG. 2, the conductive base 3 includes a plurality of conductive sheets 31 and a hole 32, wherein the hole 32 is defined and surrounded by the conductive sheets 31. The hole 32 is configured to be inserted by the conductive element 2, such that the conductive sheets 31 are compressed and electrically connected to the conductive element 2. Furthermore, the conductive base 3 further comprises an upper body 33 and a lower body 34, the upper body 33 is combined onto the lower body 34, the conductive sheets 31 are disposed on the lower body 34, and the hole 32 is located below a through hole 331 of the upper body 33. In the embodiment, a diameter of the through hole 331 is gradually tapered from a top of the upper body 33 to a bottom of the upper body 33.

Referring to FIG. 2, a recess 332 is formed on the bottom of the upper body 33 and the recess 332 is in communication with the through hole 331. The recess 332 is configured to accommodate a plurality of upper edges of the conductive sheets 31. In the embodiment, a diameter of the recess 332 is larger than a diameter of the hole 32 formed by the upper edges of the conductive sheets 31.

Referring to FIG. 2, a bottom of the lower body 34 is provided with a plurality of electrodes 103 electrically connected to the conductive sheets 31. In the embodiment, each of the conductive sheets 31 comprises an upper portion 311 and a lower portion 312. A connection between the upper portion 311 and the lower portion 312 is concave and formed an angle. The angle is an obtuse angle, and, for example, the angle is 160 degrees. The lower portion 312 is electrically connected to the corresponding electrode 103. Furthermore, the conductive base 3 further comprises a tightening spring 35 and the tightening spring 35 strains a periphery of the conductive sheets 31. The tightening spring 35 is located at the connection between the upper portion 311 and the lower portion 312.

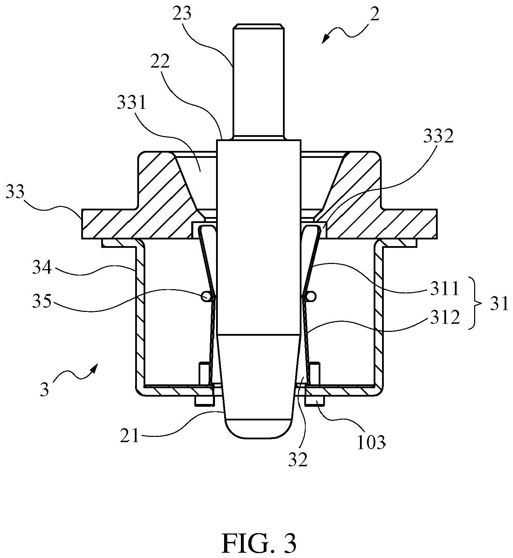

Referring to FIG. 2 and FIG. 3, the conductive element 2 comprises a front section 21, a medium section 22, and a rear section 23, wherein the front section 21 is tapered and extended from one end of the medium section 22. The front section 21 is configured to enter the hole 32 from the through hole 331 via the recess 332, and the front section 21 is compressed and clamped by the upper portions 311 of the conductive sheets 31 to press the conductive element 2 (shown in FIG. 3). The rear section 23 is extended from another end of the medium section 22, and the rear section 23 is configured to combine onto the electroplating rack 101.

According to the above structure, when an electroplating operation is performed, the electroplating rack 101 descends, so that the electroplating roller 104 moves toward the platform 102, and the electroplating roller 104 is immersed in the electrolyte (not shown). During the descending process of the electroplating rack 101, the front section 21 of the conductive element 2 first enters the hole 32 from the through hole 331 through the recess 332. The front section 21 of the conductive element 2 contacts and pushes the conductive sheets 31. At the same time, the conductive sheets 31 are constrained by the elastic restoring force of the tightening spring 35, so that the upper portion 311 of the conductive sheets 31 are compressed and clamped tightly against the conductive element 2 (shown in FIG. 3). The conductive element 2 is fixed at a specific position without loosening, so that the conductive element 2 is electrically connected to the conductive sheets 31 and subsequent electroplating operations are performed.

As described above, the conductive element 2 and the conductive sheets 31 are pressed against each other, and the conductive element 2 may be stably fixed in a specific position, so that the position of the electroplating rack 101 after the drop may be accurately controlled and positioned. The conductive elements 2 do not easily slip off, and the conductive element 2 and the conductive sheets 31 may be electrically connected effectively and continuously. It may reduce energy consumption and improve the plating quality of the electroplating operation and may also avoid the aging of the components. Moreover, the plugging and unplugging combination of the conductive element 2 and the conductive sheets 31 is also relatively simple and convenient for subsequent maintenance and cleaning.

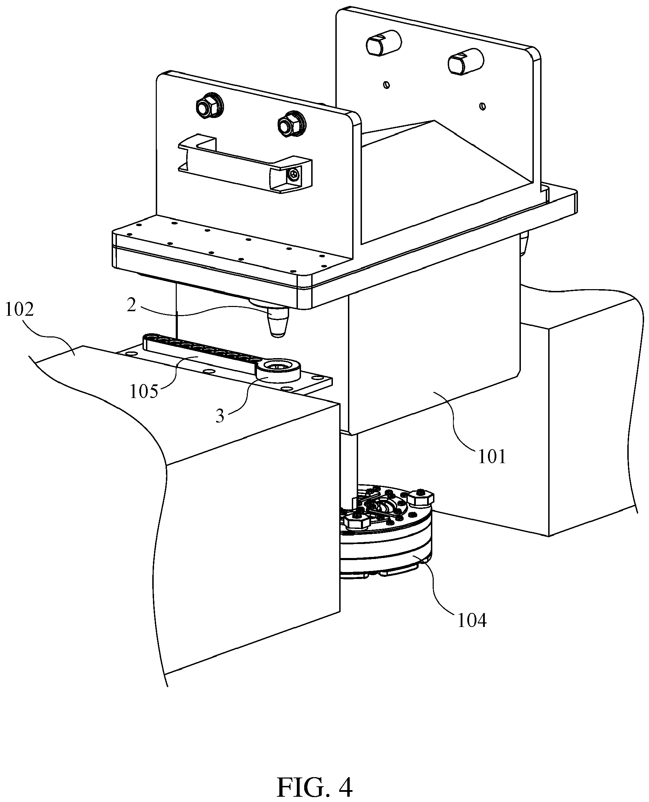

Referring to FIG. 4, a fixing device of an electroplating rack 101 according to another embodiment of the present disclosure is illustrated. The fixing device comprises a conductive element 2 and a conductive base 3, wherein the conductive base 3 is arranged on a platform 102 and the conductive base 3 is disposed on one side of a contact bus bar 105 for electrical signals. The conductive element 2 is disposed on one side of the electroplating rack 101, and the conductive base 3 is opposite the conductive element 2. In the embodiment, an electroplating roller 104 is disposed on a bottom of the electroplating rack 101, and the electroplating roller 104 is driven and rotated by a driver (not shown) located below the electroplating rack 101.

As described above, the conductive element 2 and the conductive sheets 31 are pressed against each other, and the conductive element 2 may be stably fixed in a specific position, so that the position of the electroplating rack 101 after the drop may be accurately controlled and positioned. The conductive elements 2 do not easily slip off, and the conductive element 2 and the conductive sheets 31 may be electrically connected effectively and continuously. It may reduce energy consumption and improve the plating quality of the electroplating operation and may also avoid the aging of the components. Moreover, the plugging and unplugging combination of the conductive element 2 and the conductive sheets 31 is also relatively simple and convenient for subsequent maintenance and cleaning. Disposing the conductive base 3 on one side of the contact bus bar 105 may also effectively save the space occupied by the components, so as to reduce the production cost.

The present disclosure has been described with preferred embodiments thereof and it is understood that many changes and modifications to the described embodiments can be carried out without departing from the scope and the spirit of the invention that is intended to be limited only by the appended claims.

## Claims

1. A fixing device of an electroplating rack (101), **characterized in that** the fixing device comprises:
at least one conductive element (2) disposed on the electroplating rack (101); and at least one conductive base (3) arranged on a platform (102) and opposite the conductive element (2), wherein the conductive base (3) includes a plurality of conductive sheets (31) and a hole (32) defined and surrounded by the conductive sheets (31), and the hole (32) is configured to be inserted by the conductive element (2) such that the conductive sheets (31) are compressed and electrically connected to the conductive element (2).

2. The fixing device according to claim 1, **characterized in that** the conductive base (3) further comprises an upper body (33) and a lower body (34), the upper body (33) is combined onto the lower body (34), the conductive sheets (31) are disposed on the lower body (34), and the hole (32) is located below a through hole (331) of the upper body (33).

3. The fixing device according to claim 2, **characterized in that** a diameter of the through hole (331) is gradually tapered from a top of the upper body (33) to a bottom of the upper body (33).

4. The fixing device according to claim 3, **characterized in that** a recess (332) is formed on the bottom of the upper body (33) and in communication with the through hole (331), and the recess (332) is configured to accommodate a plurality of upper edges of the conductive sheets (31).

5. The fixing device according to claim 4, **characterized in that** a diameter of the recess (332) is larger than a diameter of the hole (32) formed by the upper edges of the conductive sheets (31).

6. The fixing device according to claim 2, **characterized in that** a bottom of the lower body (34) is provided with at least one electrode (103) electrically connected to the conductive sheets (31).

7. The fixing device according to claim 1, **characterized in that** each of the conductive sheets (31) comprises an upper portion (311) and a lower portion (312), and a connection between the upper portion (311) and the lower portion (312) is concave and formed an angle.

8. The fixing device according to claim 1, **characterized in that** the conductive base (3) further comprises a tightening spring (35) straining a periphery of the conductive sheets (31).

9. The fixing device according to claim 1, **characterized in that** the conductive element (2) comprises a front section (21), a medium section (22), and a rear section (23), the front section (21) is tapered and extended from one end of the medium section (22), the rear section (23) is extended from another end of the medium section (22), and the rear section (23) is configured to combine onto the electroplating rack (101).
